# EUROPÄISCHE PATENTSCHRIFT

(11) **EP 0 386 505 B1**
(45) Veröffentlichungstag und Bekanntmachung des Hinweises auf die Patenterteilung: **29.12.1993**
(21) Anmeldenummer: 90103029.6
(22) Anmeldetag: 16.02.1990
(51) Int. Cl.: B01D 53/08, B01J 8/12

(54) **Verfahren zur Entfernung von Schadgasen aus Gasen und Wanderschichtreaktor zur Durchführung des Verfahrens**
Process for eliminating noxious gases from gases and moving bed reactor for executing the process
Procédé pour éliminer des gaz nocifs à partir de gaz et réacteur à lit mobile pour réaliser ce procédé

(30) Priorität: 16.02.1989 DE 3904697
(43) Veröffentlichungstag der Anmeldung: 12.09.1990
(73) Patentinhaber: Hugo Petersen Ges. für verfahrenstechn. Anlagenbau mbH & Co KG, 65036 Wiesbaden (DE)
(72) Erfinder: Seipenbusch, Jürgen, Dipl.-Ing., D-6200 Wiesbaden (DE)
(74) Vertreter: Carstens, Wilhelm, Dipl.-Phys.

(56) Entgegenhaltungen:
- WO-A-89/02779
- WO-A-89/07485
- DE-A- 2 005 869
- US-A- 2 656 007

## Beschreibung

Die Erfindung betrifft zunächst ein Verfahren zur Entfernung von Schadgasen aus Gasen, bei dem die Gase aus einem Gaseintrittsraum durch einen mit von oben nach unten wandernden körnigem Adsorptionsmittel gefüllten Reaktionsraum geführt werden und aus diesem in einen Gasaustrittsraum eintreten.

Aus der DE-A-36 38 611 ist ein Wanderschichtreaktor bekannt, bei dem die von den Schadgasen zu befreienden Gase quer durch eine von oben nach unten wandernde Schicht aus körnigem Adsorptionsmittel geführt werden, d. h. bezogen auf die Wanderrichtung der Wanderschicht im Kreuzstrom. Bei einem Kreuzstromwanderschichtreaktor wird die durch den Reaktionsraum unter Einfluß der Schwerkraft wandernde Schicht zwischen zwei gasdurchlässigen Wänden gehalten, die z. B. als Jalousie ausgebildet sein können. Die Adsorption der Schadgase an dem Adsorbens wird durch Adsorptionsisotherme gekennzeichnet, die für bestimmte Temperatur- und Druckverhältnisse den Gleichgewichtszustand zwischen der Schadgaskonzentration im zu reinigenden Gas und der Konzentration auf dem Adsorbens angeben, d. h. eine hohe Schadstoffkonzentration im Gas korrespondiert mit einer hohen Konzentration auf dem Adsorbens.

Unter Berücksichtigung der auf der Austrittsseite des Reaktionsraums zu erreichenden Endreinheit wird bei einem Kreuzstrom-Wanderschichtreaktor eine relativ schlechte Ausnutzung des Adsorptionsmittels erreicht, da die längs der Austrittsseite von oben nach unten wandernde Teilschicht (in Strömungsrichtung des Gases gesehene hintere Schicht) nicht voll beladen werden kann, ohne daß die Gefahr eines Schadgasdurchbruches in den Gasaustrittsraum hinein besteht. Beim Kreuzstrom-Reaktor muß daher stets Adsorptionsmittel mit abgezogen werden, das noch nicht in höchstmöglicher Weise mit den Schadstoffen beladen ist.

Bei einem Wanderbettreaktor, bei dem die zu reinigenden Gase im Gegenstrom zu dem Adsorptionsmittel geführt werden (vgl. z. B. den Wanderschichtreaktor der DE-A-35 28 222), trifft das dem Reaktor oben zugeführte frische Adsorbens im Gegenstrom mit weitgehend gereinigtem Gas zusammen und wird durch die Wanderung entgegen dem in den Reaktor eintretenden Gasstrom mit immer höheren Schadstoffkonzentrationen in Berührung gebracht, so daß am Gaseintritt die maximale Beladung des Adsorptionsmittels mit den Schadgasen erreicht wird. Ein Gegenstromreaktor mit Wanderschicht führte zwar zu einer besseren Ausnutzung des Adsorptionsmittels, macht aber - wie z. B. die DE-A-35 28 222 zeigt - den Aufbau von Gaszufuhr und Abfuhr und von Adsorptionsmittelzufuhr und Abfuhr recht kompliziert.

Es ist daher die Aufgabe der vorliegenden Erfindung ein Verfahren anzugeben, das im wesentlichen die Vorteile einer Verfahrensführung im Kreuzstrom mit den Vorteilen einer Verfahrensführung im Gegenstrom miteinander verbindet.

Diese Aufgabe wird dadurch gelöst, daß aus einer unter einem Winkel gegen die Vertikale auf der Gasaustrittsseite geführten Wanderschicht Teilwanderschichten nacheinander nach unten abgezweigt werden und diese Teilwanderschichten auf der Gaseintrittsseite aus dem Reaktionsraum abgezogen werden.

Durch die Aufspaltung der unter einem Winkel gegen die Vertikale auf der Austrittsseite geführten Wanderschicht in eine Vielzahl von Teilströmen ist somit eine definierte Wanderung des Adsorptionsmittels von der Gasaustrittsseite (Reingasseite) zur Gaseintrittsseite (Rohgasseite) gewährleistet. Es erfolgt somit eine weitgehende Beladung allen in den Reaktionsraum eingebrachten Adsorptionsmittels, ohne daß ein Schadstoffdurchbruch möglich wird. In den nach unten abgezweigten Teilwanderschichten kann eine Verfahrensführung im Gegenstrom erfolgen.

Es ist daher zweckmäßig, wenn die Teilströme vertikal nach unten abgezweigt werden.

Es ist einerseits möglich, daß der Abzug und damit die Abzweigung der Teilwanderschichten aus der Schrägschicht zeitgleich erfolgt; es ist jedoch auch denkbar, daß der Abzug zeitlich unabhängig voneinander erfolgt.

Die Erfindung richtet sich auch auf einen Wanderschichtreaktor zur Entfernung von Schadgasen aus Gasen mit einem Gaseintrittsraum, einem mit von oben nach unten wandernden körnigem Adsorptionsmittel gefüllten Reaktionsraum und einem Gasaustrittsraum, wobei die Gasräume von dem Reaktionsraum durch gegenüberliegende und im wesentlichen parallel zueinander sich erstreckende gasdurchlässige Trennwände getrennt sind.

Bei dieser Vorrichtung ist erfindungsgemäß vorgesehen, daß die gasdurchlässigen Trennwände unter einem vorgegebenen Winkel gegen die Vertikale geneigt sind und sich von der dem Gaseintrittsraum zugeordneten Trennwand Leitwände nach oben in Richtung auf die obere Wand zu erstrecken und im vorgegebenen Abstand von dieser enden, und daß den unteren Enden der von den Leitwänden begrentzen Teilräume jeweils ein Abzugsorgan zugeordnet ist.

Mit dieser einfachen Konstruktion wird erreicht, daß das bei einem Kreuzstromverfahren nicht ausreichend beladene Schichtmaterial an der Gasaustrittsseite in Bereiche überführbar ist, in denen es in ausreichender Weise beladen wird. Dabei wird das sehr viel weniger aufwendige Konstruktionsprinzip eines Kreuzstromreaktors im wesentlichen beibehalten, jedoch durch die Neigung des Reaktionsraumes um den vorgegebenen Winkel gegen die Vertikale ohne weitere Hilfsmittel eine Wanderung des Adsorbens von der Reingasseite zur Rohgasseite bewirkt.

Unter Umständen kann es sinnvoll sein, die Gegenströmung in den einzelnen Teilräumen des Reaktionsraumes zwischen den Leitblechen mit einer Kreuzstromkomponente zu überlagern; dies kann dann dadurch erreicht werden, daß die Leitwände gasdurchlässig ausgebildet werden.

Zur Abfuhr des durch die untere Trennwand austretenden Adsorptionsmittels kann unterhalb der geneigten unteren Trennwand eine ebenfalls gasdurchlässige Führungswand angeordnet sein, die das über die Abzugsorgane aus den Teilräumen abgezogene Adsorptionsmittel nach unten hin abführt.

Bei einem höheren Feinstaubgehalt kann es jedoch auch zweckmäßig sein, die Abzugsorgane mit einer sich durch den Gaseintrittsraum erstreckenden geschlossenen Abfuhrleitung zu verbinden.

Für die Einleitung der Abzweigung bzw. den Abzug vom Adsorptionsmittel aus den Teilräumen ist es möglich, daß die Abzugsorgane miteinander gekoppelt sind.

Hierzu können die Abzugsorgane z. B. die Form einer beweglichen Jalousie mit entsprechend beabstandeten Jalousieelementen aufweisen. Andererseits ist es auch möglich, daß die Abzugsorgane getrennt voneinander betätigbar sind, z. B. in Form von getrennt ansteuerbaren und das Material über einen Austragstisch abziehenden Austragswalzen. Selbstverständlich sind andere Abzugskonstruktionen wie Zellradschleusen, Klappen und dergleichen einsetzbar.

Die Vorteile des erfindungsgemäßen Verfahrens werden auch noch erreicht, wenn in Wanderrichtung des Adsorptionsmittels gesehen dem Reaktionsraum mit geneigten Trennwänden ein Vorreaktionsraum mit vertikalen Trennwänden ohne Abzugsorgane vorgeschaltet ist, d. h. ein Abschnitt mit reiner Kreuzstrom-Führung. Durch den nachgeschalteten Schrägabschnitt wird immer noch sichergestellt, daß kein ungenügend beladenes Adsorptionsmittel abgezogen wird.

Bei einem Vorreaktionsraum kann es möglich sein, daß Leitbleche der oberen Teilräume in den Vorschaltreaktionsraum hineinragen.

Die Erfindung soll nun anhand der beigefügten Figuren näher erläutert werden. Es zeigen:
- FIG. 1: einen Wanderschicht-Reaktor mit schräg gestelltem Reaktionsraum und einer unter der unteren Trennwand angeordneten Führungswand,
- FIG. 2: ein Wanderschicht-Reaktor gemäß FIG. 1 mit Vorreaktionsraum,
- FIG. 3: einen Wanderschicht-Reaktor (vergleichbar FIG. 1) mit einer anderen Art von Austragsorganen und
- FIG. 4: einen Wanderschicht-Reaktor mit Austragsorganen gem. FIG. 3 jedoch mit einer geschlossenen Abfuhrleitung im Gaseintrittsraum.

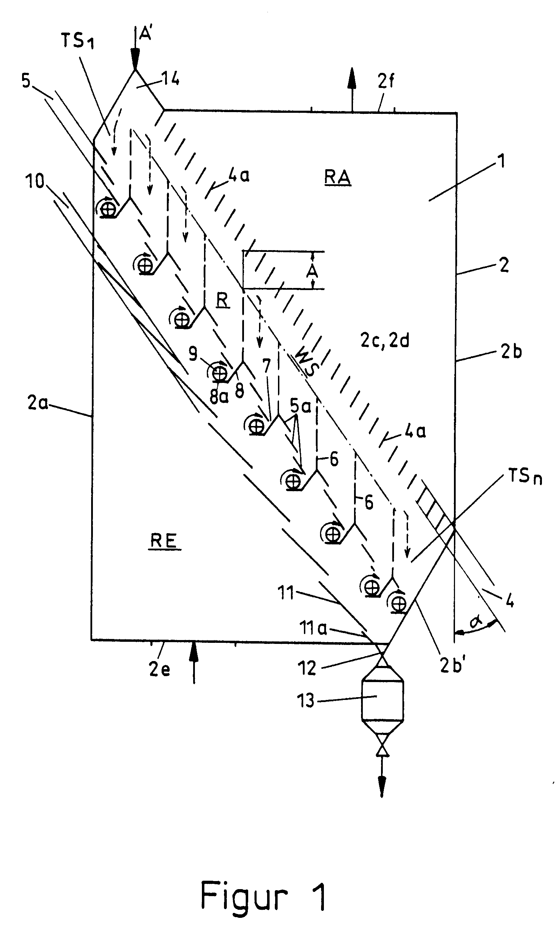

Bei dem in der Figur 1 gezeigten Wanderschicht-Reaktor 1 erstrecken sich in einem Gehäuse 2 mit Vorderwand 2a und Rückwand 2b, sowie Seitenwänden 2c und 2d zwei Jalousien 4 und 5 mit feststehenden Jalousieelementen unter einem Winkel von α = 35° zur Vertikalen. Die obere Jalousie 4 ist aus sich parallel zueinander erstreckenden Jalousieelementen 4a aufgebaut, während die untere Jalousie 5 aus gruppenweise übereinander angeordneten Jalousieelementen 5a aufgebaut ist. Ausgehend von dem in der einzelnen Gruppe jeweils oben liegenden Jalousieelement 5a erstrecken sich gasdurchlässige Leitbleche 6 im wesentlichen parallel zur Vorderwand und zur Rückwand nach oben auf die Jalousie 4 zu und enden in einem vorgegebenen Abstand A vor der Jalousie 4. Von der Verbindungskante des gasdurchlässigen Leitbleches 6 und dem Jalousieelement 5a erstreckt sich unter Freilassung eines Austragsspaltes 7 ein Austragstischblech 8 nach unten. Parallel zur Horizontalfläche 8a des Austragstischbleches 8 erstreckt sich eine in Richtung des Pfeiles drehbare Austragswalze 9.

Mit Abstand von der unteren Jalousie 5 erstreckt sich eine gasdurchlässige Führungswand 10 die gem. FIG. 1 vorzugsweise aus sich ebenfalls zwischen den Seitenwänden 2c und 2d erstreckenden Leitblechen 11 aufgebaut ist. Das untere Leitblech 11a bildet zusammen mit einem geneigten Abschnitt 2b' der Rückwand einen Austragstrichter, aus dem Material über eine Austragsarmatur 12 in eine Austragsschleuse 13 eintragbar ist.

Bei Eintrag von Adsorptionsmittel A' in den zwischen den Jalousien 4 und 5 begrenzten Reaktionsraum R über eine dachartige Eintragshaube 14 wird zunächst der gesamte Innenraum zwischen den Jalousien mit körnigem vorzugsweise kohlenstoffhaltigen Adsorptionsmittel aufgefüllt.

Bei Einlaß von zu reinigendem Rohgas über eine untere Eintrittsöffnung Zf in den Rohgaseintrittsraum RE unterhalb der Jalousie 5 tritt dieses in den Reaktionsraum R ein und strömt dann über die Jalousie 4 in den Gasaustrittsraum RA ein und verläßt diesen als Reingas über die Austrittsöffnung 2d in dem Gehäuse 2. Das Volumen des Reaktionsraumes R wird durch die Leitbleche 6 in ein obenliegendes zusammenhängendes Volumen WS (schematisch gekennzeichnet durch die strichpunktierte Linie in der FIG.) und in eine Vielzahl von durch die Leitbleche 6 begrenzten oder teilbegrenzten Teilvolumina TS₁ ... TSₙ aufgeteilt. Bei Betätigung der Austragswalzen wird aus den einzelnen Teilvolumina TS₁ bis TSₙ an deren unterem Ende erschöpftes Adsorbens entnommen, während teilbeladenes Adsorbens aus der Schicht WS oben in die einzelnen Teilvolumina TSᵢ in Richtung der Pfeile eintritt und somit der entsprechend der Neigung α der gasdurchlässigen Begrenzungswände 4 und 5 dem Gas entgegengeführt, wenn die Leitbleche 6 gasdurchlässig sind. Bei undurchlässigen Leitblechen 6 strömt das Gas zunächst im Gegenstrom innerhalb der Teilvolumina TSᵢ und tritt dann durch die Schicht WS in Richtung auf die Jalousie 4 aus. Frisches Adsorptionsmittel ruscht für alle Teilvolumina längs der Schicht WS nach, d. h. durch den von den oberen Enden der Leitbleche 5 und der gasaustritttsseitigen Jalousie 4 gebildeten Zwischenraum nach.

Die Austragswalzen 9 können gemeinsam angesteuert werden, können jedoch auch jeweils einzeln betätigt werden.

"In der Beschreibung und/oder den Figuren der nachfolgend beschriebenen Ausführungensformen sind soweit als möglich und erforderlich Bezugszeichen der Ausführungsform gemäß Fig. 1 übernommen worden."

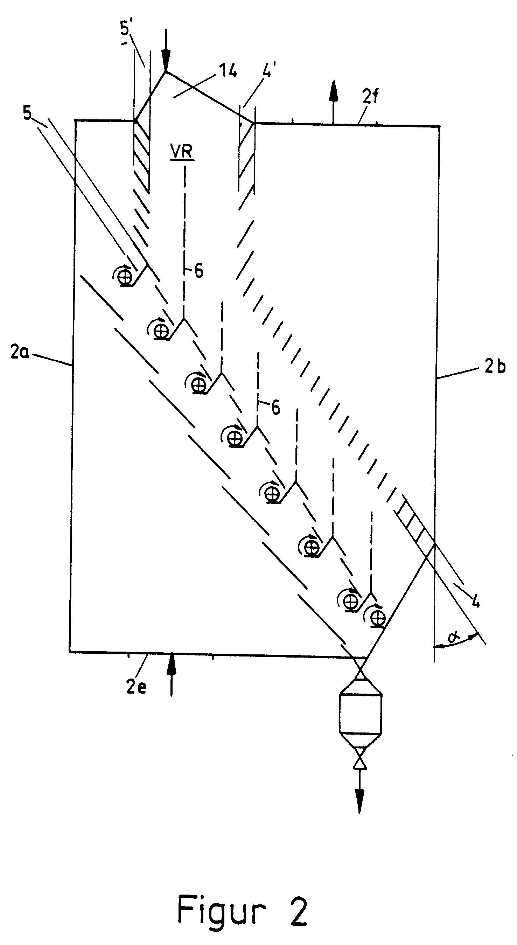

Bei der Ausführungsform gem. FIG. 2 erstrecken sich die Trennwände 4 und 5 nicht von der Vorderwand 2a bis zur Rückwand 2b, sondern zur Verbesserung der Beladung im oberen Bereich des Wanderschicht-Reaktors 1 ist ein nur im Kreuzstrom betriebener Vorreaktionsraum VR vorgesehen, der von senkrechten Trennwandabschnitten 4' und 5' begrenzt ist.

Die Leitbleche 6, die den beiden oberen Austragsorganen zugeordnet sind, erstrecken sich nach oben in den Vorreaktionsraum VR hinein. Die Eintragshaube 14 ist um einen entsprechenden Betrag verschoben.

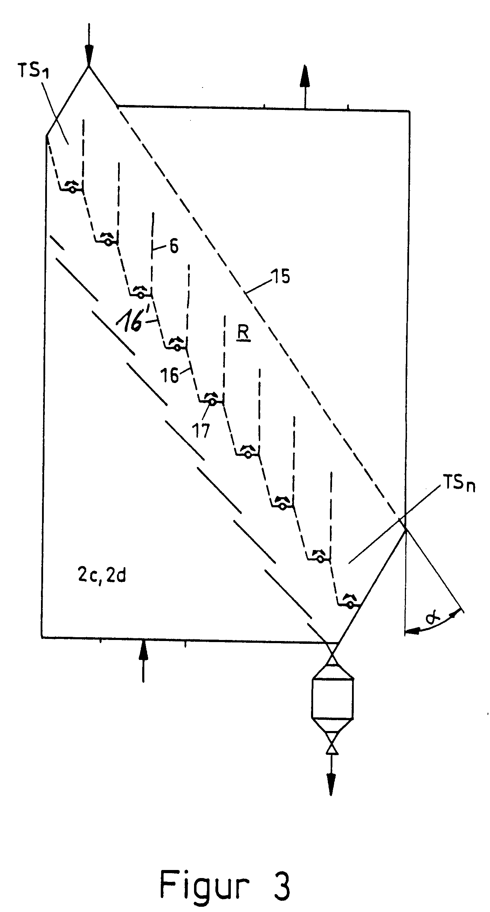

Bei der Ausführungsform der FIG. 3 sind die obere Trennwand 15 und die Abschnitte 16' der unteren Trennwand 16 nicht als Jalousiewände ausgebildet, sondern als Lochbleche oder Kiemenbleche ausgeführt. Als Austragsorgane sind den unteren Enden der Teilvolumina TSᵢ sich zwischen den beiden Seitenwänden 2c und 2d erstreckende drehbare Lamellenbleche 17, die in der FIG. 3 in geschlossener Position dargestellt sind und zum Austragen von Adsorptionsmitteln aus dem einzelnen Teilvolumen durch Drehen geöffnet werden können. Die Drehbewegung der Lamellen kann miteinander gekoppelt sein; auch ein zeitlich getrenntes drehen der Lamellen ist möglich.

Selbstverständlich können auch bei den Ausführungsformen gem. FIG. 1 und 2 anstelle der Jalousien Loch- oder Kiemenbleche oder andere gasdurchlässige Wandkonfigurationen verwendet werden, solange eine sichere Führung und Halterung des im Reaktionsraum R von oben nach unten wandernden Adsorptionsmittels gewährleistet ist.

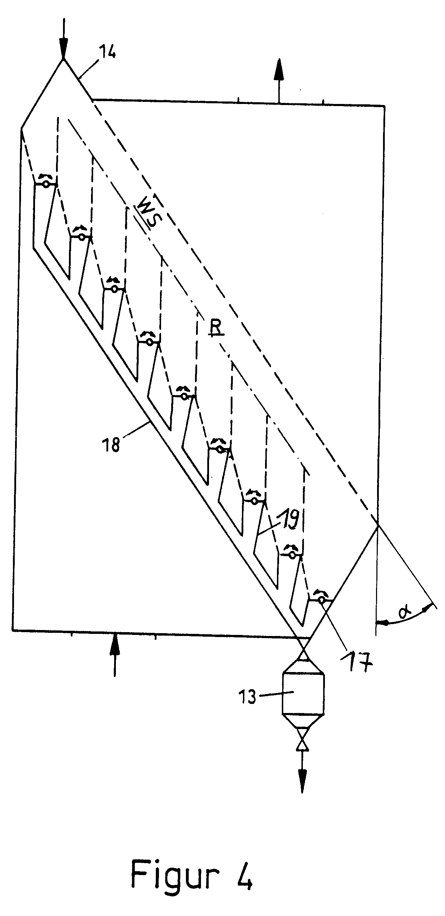

Die in der FIG. 4 gezeigte Ausführungsform kommt bevorzugt dann zur Anwendung, wenn mit dem Gas oder dem Adsorbens Feinstaub in den Reaktionsraum R eingetragen wird, der bei einem offenen Abzug (vergleichbar mit den Ausführungsformen gem. FIG. 1-3) über einen Windsichtereffekt stets wieder in den Reaktionsraum zurückgeführt werden würde. Um dies zu vermeiden, sind unterhalb der Austragslamellen 17 Trichter 19 angeordnet, in denen das Adsorbens mit dem Feinstaub aufgefangen wird. Auslaßseitig sind die Trichter 17 mit einer geschlossenen Rohrleitung 18 verbunden, die das abgeschiedene Gut zur Austragsschleuse 13 führt. Auch dieses Austragssystem kann in Zusammenhang mit Austragswalzen, Zellradschleusen oder dergleichen verwendet werden.

Für den Winkel α kommt ein Wertebereich von 3 bis 45° in Frage. Hiervon wird wiederum bevorzugt der Winkelbereich von 5 bis 15°. In erster Linie muß sichergestellt werden, daß das über die Eintrittshaube 14 zugeführte Adsorptionsmittel in ausreichender Weise längs der Verteilungsschicht WS nach unten wandert und in die Teilvolumina TSᵢ eintritt.

## Patentansprüche

1. Verfahren zur Entfernung von Schadgasen aus Gasen, bei dem die Gase aus einem Gaseintrittsraum (RE) durch einen mit von oben nach unten wandernden körnigem Adsorptionsmittel gefüllten Reaktionsraum (R) geführt werden und aus diesem in einen Gasaustrittsraum (RA) eintreten, **dadurch** **gekennzeichnet**, daß aus einer im Reaktionsraum (R) unter einem Winkel (α) gegen die Vertikale auf der Gasaustrittsseite (RA) nach unten geführten Wanderschicht (WS) Teilwanderschichten (TS) nacheinander nach unten abgezweigt werden und diese Teilwanderschichten auf der Gaseintrittsseite (RE) aus dem Reaktionsraum (R) abgezogen werden, wobei das Gas nacheinander die Teilwanderschichten und die unter einem Winkel gegen die Vertikale nach unten geführte Wanderschicht (WS) durchströmt.

2. Verfahren nach Anspruch 1, **dadurch** **gekennzeichnet**, daß die Teilströme (TS) vertikal nach unten abgezweigt werden.

3. Verfahren nach Anspruch 1 oder 2, **dadurch** **gekennzeichnet**, daß der Abzug und damit die Abzweigung der Teilwanderschichten (TS) aus der Schrägschicht (WS) zeitgleich erfolgt.

4. Verfahren nach Anspruch 1 oder 2, **dadurch** **gekennzeichnet**, daß der Abzug und damit die Abzweigung der Teilwanderschichten (TS) aus der Schrägschicht (WS) zeitlich unabhängig voneinander erfolgt.

5. Wanderschichtreaktor zur Entfernung von Schadgasen aus Gasen mit einem Gaseintrittsraum (RE), einem mit von oben nach unten wandernden körnigem Adsorptionsmittel gefüllten Reaktionsraum (R) und einem Gasaustrittsraum (RA), wobei die Gasräume (RE, RA) von dem Reaktionsraum (R) durch gegenüberliegende und im wesentlichen parallel zueinander sich erstreckende gasdurchlässige Trennwände (4, 5; 15, 16) getrennt sind, **dadurch** **gekennzeichnet**, daß die gasdurchlässigen Trennwände (4, 5; 15, 16) unter einem vorgegebenen Winkel (α) gegen die Verkikale geneigt sind und sich von der dem Gaseintrittsraum (RE) zugeordneten Trennwand (5; 16) Leitwände (6) nach oben in Richtung auf die obere Wand (4; 15) zu erstrecken und im vorgegebenen Abstand von dieser enden und daß den unteren Enden der von den Leitwänden (6) begrenzten Teilräume (TSᵢ) jeweils ein Abzugsorgan (9; 17) zugeordnet ist.

6. Wanderschicht-Reaktor nach Anspruch 5, **dadurch** **gekennzeichnet**, daß die Leitwände (6) gasdurchlässig ausgebildet sind.

7. Wanderschicht-Reaktor nach Anspruch 5, **dadurch** **gekennzeichnet**, daß die Leitwände (6) gasundurchlässig ausgebildet sind.

8. Wanderschicht-Reaktor nach mindestens einem der Ansprüche 5 bis 7, **dadurch** **gekennzeichnet**, daß unterhalb der geneigten unteren Trennwand (5; 16) eine ebenfalls gasdurchlässige Führungswand (10) angeordnet ist, die das über die Abzugsorgane aus den Teilräumen (TSᵢ) abgezogene Adsorptionsmittel nach unten hin abführt.

9. Wanderschicht-Reaktor nach mindestens einem der Ansprüche 5 bis 7, **dadurch** **gekennzeichnet**, daß die Abzugsorgane (17) mit einer sich durch den Gaseintrittsraum (RE) erstreckenden geschlossenen Abfuhrleitung (18) verbunden sind.

10. Wanderschicht-Reaktor nach mindestens einem der Ansprüche 5 bis 9, **dadurch** **gekennzeichnet**, daß die Abzugsorgane (9; 17) miteinander gekoppelt oder getrennt betätigbar sind.

11. Wanderschicht-Reaktor nach mindestens einem der Ansprüche 5 bis 10, **dadurch** **gekennzeichnet**, daß in Wanderrichtung des Adsorptionsmittels gesehen dem Reaktionsraum (R) mit geneigten Trennwänden (4, 5; 15, 16) ein Vorreaktionsraum (VR) mit vertikalen Trennwänden (4', 5') vorgeschaltet ist.

12. Wanderschicht-Reaktor nach mindestens einem der Ansprüche 5 bis 11, **dadurch** **gekennzeichnet**, daß Leitbleche (6) der oberen Teilräume (TS₁, TS₂) in den Vorreaktionsraum (VR) hineinragen.

## Claims

1. Process for removing of noxious gases from gases, with which the gases are led from a gas inlet space (RE) through a reaction space (R) filled with a particulate adsorption agent which is moving from above to below and from which reaction space the gases enter into a gas outlet space (RA),
**characterized** in that
from a moving layer (WS) being guided in the reaction space (R) on the gas outlet side (RA) in a downward direction under an angle (α) with respect to the vertical, part moving layers (TS) are branched off one after the other in a downward direction and said part moving layers are withdrawn on the gas outlet side (RE) from the reaction space (R), said gas flowing successively through the part moving layers and the moving layer (WS), which is guided under the angle with respect to the vertical in a downward direction.

2. The process according to claim 1,
**characterized** in that
the part moving layers (TS) are branched off vertically in a downward direction.

3. The process according to claim 1 or 2,
**characterized** in that
the withdrawal and therewith the branching off of the part moving layers (TS) from the inclined layer (WS) take place simultaneously.

4. The process according to claim 1 or 2,
**characterized** in that
the withdrawal and therewith the branching off of the part moving layers (TS) from the inclined layer (WS) take place in a temporal manner independent from each other.

5. Moving layer reactor for removing of noxious gases from gases with a gas inlet space (RE), a reaction space (R) filled with a particulate adsorption agent moving from above to below and a gas outlet space (RA), the gas spaces (RE, RA) being separated from the reaction space (R) by opposite separation walls (4, 5; 15, 16) permeable to gas and extending substantially in parallel
**characterized** in that
the gas permeable separation walls (4, 5; 15, 16) are inclined under a predetermined angle (α) to the vertical and that from the separation wall (5; 16) associated to the gas inlet space (RE) guiding walls (6) extend upwardly in the direction towards the upper wall (4; 15) and terminate in a predetermined distance from this wall and in that to the lower end of each part space (TSᵢ) delimited by the guiding walls (6) a withdrawal device (9; 17) is associated.

6. The moving layer reactor according to claim 5,
**characterized** in that
the guiding walls (6) are permeable to gas.

7. The moving layer reactor according to claim 5,
**characterized** in that
the guiding walls (6) are impermeable to gas.

8. The moving layer reactor according to at least one of the claims 5 to 7,
**characterized** in that
below of the inclined lower separation wall (5; 16) a also gas permeable guiding wall (10) is arranged, which wall carries off in a downward direction the adsorption agent withdrawn by the withdrawal devices from the part spaces (TSᵢ).

9. The moving layer reactor according to at least one of the claims 5 to 7,
**characterized** in that
the withdrawal devices (17) are connected to a closed withdrawal conduit (18) extending through the gas inlet space (RE).

10. The moving layer reactor according to at least one of the claims 5 to 9,
**characterized** in that
the withdrawal devices (9; 17) are coupled to each other or actuable separately.

11. The moving layer reactor according to at least one of the claims 5 to 10,
**characterized** in that
seen in the moving direction of the adsorption agent a pre-reaction space (VR) with vertical separation walls (4'; 5') is arranged before the reaction space (R) having inclined to separation walls (4, 5; 15, 16).

12. The moving layer reactor according to at least one of the claims 5 to 11,
**characterized** in that
the guiding walls (6) of the upper part spaces (TS₁, TS₂) extend into the pre-reaction space (VR).

## Revendications

1. Procédé permettant d'extraire des gaz polluants à partir de gaz, selon lequel, à partir d'une chambre d'entrée de gaz (RE), les gaz passent par une chambre de réaction (R) remplie d'un agent d'adsorption en grains se déplacant de haut en bas et pénètrent dans une chambre de sortie de gaz (RA) à partir de cette chambre de réaction, caractérisé en ce qu'à partir d'une couche mobile (WS) qui passe vers le bas dans la chambre de réaction (R) du côté de la chambre de sortie de gaz (RA) en faisant un angle (α) avec la verticale, des couches mobiles partielles (TS) sont déviées vers le bas l'une à la suite de l'autre et ces couches mobiles partielles sont extraites de la chambre de réaction (R) du côté de la chambre d'entrée de gaz (RE), les gaz traversant successivement les couches mobiles partielles et la couche mobile (WS) qui passe vers le bas en faisant un angle avec la verticale.

2. Procédé suivant la revendication 1, caractérisé en ce que les courants partiels (TS) sont déviés verticalement vers le bas.

3. Procédé suivant l'une des revendications 1 et 2, caractérisé en ce que l'extraction et donc la déviation des couches mobiles partielles (TS) à partir de la couche inclinée (WS) ont lieu simultanément.

4. Procédé suivant l'une des revendications 1 et 2, caractérisé en ce que l'extraction et donc la déviation des couches mobiles partielles (TS) à partir de la couche inclinée (WS) ont lieu d'une manière temporellement indépendante l'une de l'autre.

5. Réacteur à couche mobile permettant d'extraire des gaz polluants à partir de gaz, comprenant une chambre d'entrée de gaz (RE), une chambre de réaction (R) remplie d'un agent d'adsorption en grains se déplacant de haut en bas et une chambre de sortie de gaz (RA), les chambres de gaz (RE, RA) étant séparées de la chambre de réaction (R) par des cloisons séparatrices perméables aux gaz (4, 5 ; 15, 16) qui se font face et s'étendent d'une manière pratiquement parallèle l'une à l'autre, caractérisé en ce que les cloisons séparatrices perméables aux gaz (4, 5 ; 15, 16) sont inclinées suivant un angle préfixé (α) vis-à-vis de la verticale, en ce qu'à partir de la cloison séparatrice (5 ; 16) associée à la chambre d'entrée de gaz (RE), des cloisons directrices (6) s'étendent vers le haut en direction de la cloison supérieure (4 ; 15) et s'interrompent à une distance préfixée de cette dernière et en ce qu'à l'extrémité inférieure de chacune des chambres partielles (TSᵢ) délimitées par les cloisons directrices (6), il est associé un organe d'extraction (9 ; 17).

6. Réacteur à couche mobile suivant la revendication 5, caractérisé en ce que les cloisons directrices (6) sont perméables aux gaz.

7. Réacteur à couche mobile suivant la revendication 5, caractérisé en ce que les cloisons directrices (6) sont imperméables aux gaz.

8. Réacteur à couche mobile suivant au moins l'une des revendications 5 à 7, caractérisé en ce qu'en dessous de la cloison séparatrice inférieure (5 16) inclinée, il est disposé une cloison de guidage (10), également perméable aux gaz, qui guide et évacue vers le bas l'agent d'adsorption extrait des chambres partielles (TSᵢ) par les organes d'extraction.

9. Réacteur à couche mobile suivant au moins l'une des revendications 5 à 7, caractérisé en ce que les organes d'extraction (17) sont reliés à une conduite d'évacuation (18) fermée qui s'étend à travers la chambre d'entrée de gaz (RE).

10. Réacteur à couche mobile suivant au moins l'une des revendications 5 à 9, caractérisé en ce que les organes d'extraction (9 ; 17) sont accouplés entre eux ou sont agencés de façon à pouvoir être actionnés séparément.

11. Réacteur à couche mobile suivant au moins l'une des revendications 5 à 10, caractérisé en ce qu'une chambre de réaction préalable (VR) comportant des cloisons séparatrices (4', 5') verticales est disposée, suivant la direction de déplacement de l'agent d'adsorption, en amont de la chambre de réaction (R) comportant des cloisons séparatrices (4, 5 ; 15, 16) inclinées.

12. Réacteur à couche mobile suivant au moins l'une des revendications 5 à 11, caractérisé en ce que des tôles directrices (6) des chambres partielles supérieures (TS₁, TS₂) font saillie dans la chambre de réaction préalable (VR).
